# EUROPEAN PATENT APPLICATION

(11) **EP 1 286 560 A2**
(43) Date of publication of application: **26.02.2003**
(21) Application number: 02018408.1
(22) Date of filing: 16.08.2002
(51) Int. Cl.: H04Q 7/38

(54) **Method and apparatus for location area updating in cellular communications**

(30) Priority: 21.08.2001 US 313468 P; 16.01.2002 US 46563
(71) Applicant: Telefonaktiebolaget L M Ericsson (Publ), 126 25 Stockholm (SE)
(72) Inventor: Hogan, Billy, Dublin 6 (IE); Östrup, Nils Peter, 582 25 Linköping (SE)
(74) Representative: Mohsler, Gabriele

(57) **Abstract**

A connection is established between a mobile radio terminal and a radio access network serving plural geographic coverage areas. The radio access network transmits information associated with one of the geographic coverage areas indicating whether the one geographic coverage area requires a geographic coverage area update procedure. During the connection, when the mobile radio terminal considers selecting the one geographic coverage area, it determines whether to perform a geographic coverage area update procedure depending on the transmitted information associated with the one geographic coverage area. In a preferred, non-limiting application, the radio access network is shared by two operators, and the transmitted information indicates that the geographic coverage area update procedure should be performed for geographic coverage areas that are shared by the two operators and that the geographic coverage area update procedure need not be performed for geographic coverage areas that are not shared by the two operators.

## Description

### FIELD OF THE INVENTION

The present invention relates generally to location area updating in cellular radio telecommunications, and in one particular application, to location area updating in situations where a radio access network is shared by two or more operators.

### BACKGROUND AND SUMMARY

In a typical cellular radio system, "wireless" user equipment units (UEs) and one or more "core" networks (like the public telephone network or Internet) communicate via a radio access network (RAN). The UEs very often are mobile, e.g., cellular telephones and laptops with mobile radio communication capabilities (mobile terminals). UEs and the core networks communicate both voice and data information via the radio access network. The radio access network services a geographical area which is divided into cell areas, with each cell area being served by a base station (BS). Thus, a base station can serve one or multiple cells. A cell is a geographical area where radio coverage is provided by the radio base station equipment at a base station site. Each cell is identified by a unique identity, which is broadcast in the cell. Base stations communicate over a radio or "air" interface with the user equipment units. In the radio access network, base stations are typically connected, (e.g., by landlines or microwave links), to a radio network controller (RNC). The radio network controller, also sometimes termed a base station controller (BSC), supervises and coordinates various activities of its base stations. In turn, the radio network controllers are typically coupled together and coupled to one or more core network service nodes which interface with one or more core networks.

One example of a radio access network is the Universal Mobile Telecommunications System (UMTS) Terrestrial Radio Access Network (UTRAN). The UTRAN is a third generation system which in some respects builds upon the radio access technology known as Global System for Mobile communications (GSM) developed in Europe. UTRAN is a wideband code division multiple access (W-CDMA) system. In W-CDMA technology, a common frequency band allows simultaneous communication between a user equipment unit and plural base stations. Signals occupying the common frequency band are discriminated at the receiving station through spread spectrum CDMA waveform properties based on the use of a high speed, pseudo-noise (PN) code. These high speed PN codes are used to modulate signals transmitted from the base stations and the user equipment units. Transmitter stations using different PN codes (or a PN code offset in time) produce signals that can be separately demodulated at a receiving station. The high speed PN modulation also allows the receiving station to advantageously generate a received signal from a single transmitting station by combining several distinct propagation paths of the transmitted signal. In CDMA, therefore, a user equipment unit need not switch frequency when handoff of a connection is made from one cell to another. As a result, a destination cell can support a connection to a user equipment unit at the same time the origination cell continues to service the connection.

Since the user equipment is always communicating through at least one cell during handover, there is no disruption to the call. Hence, the term "soft handover." In contrast to hard handover, soft handover is a "make-before-break" switching operation.

The UTRAN accommodates both circuit-switched and packet-switched connections. Circuit-switched connections involve a radio network controller communicating with a mobile switching center (MSC) node which in turn is connected to a connection-oriented, external core network like the Public Switched Telephone Network (PSTN) and/or the Integrated Services Digital Network (ISDN). Packet-switched connections involve the radio network controller communicating with a Serving GPRS Support Node (SGSN), which in turn is connected through a backbone network and a Gateway GPRS support node (GGSN) to packet-switched core networks like the Internet and X.25 external networks. There are several interfaces of interest in the UTRAN. The interface between the radio network controllers and the core network(s) is termed the "lu" interface. The interface between two radio network controllers is termed the "lur" interface. The interface between a radio network controller and its base stations (or node B's) is termed the "lub" interface. The interface between the user equipment unit and the base stations is known as the "air interface" or the "radio interface." Mobility features of a mobile radio communications system can be divided into two areas: radio mobility, which mainly consists of handover, and network mobility, which mainly consists of location management including location updating and paging.

The present invention relates to network mobility. There is a tension in the network mobility process between location and paging procedures. The location procedure allows the system to monitor a user equipment's location in order to be able to find that user in case of an incoming call. Location registration is also used to bring the user's service profile near its location and allows the network to provide the services for which the user has subscribed. The paging process sends paging messages to cells where the mobile terminal could be located. Therefore, if the location cost is high, meaning that the user's location knowledge is accurate, the paging cost will be low, and paging messages need only be transmitted to a small number of cells. On the other hand, if the location cost is low, the paging cost will be high, and paging messages will have to be transmitted over a wider area.

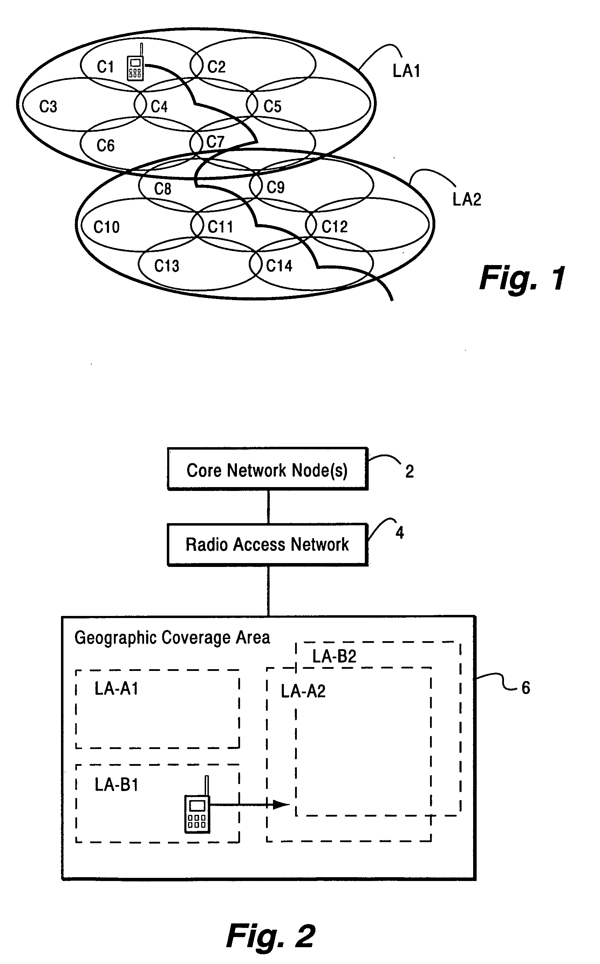

Cellular networks often make use of location areas (LAs). Fig. 1 illustrates two location areas LA1 and LA2. LA1 encompasses representative cells C1-C7, and location area LA2 encompasses representative cells C8-C14. A user equipment's location is "known," if the system knows the location area in which the subscriber is presently located. When the system must establish a communication with the mobile terminal, paging need only occur in the cells of that location area. Although mobile terminals can periodically update their locations with the network, more often location updates are provided when the mobile terminal crosses a location area boundary. This method requires that each base station cell periodically broadcast its identity and the identity of its location area. Each mobile terminal listens to the broadcast information on a cell's broadcast channel and stores the current location area identity. If the received location area identity differs from the one stored by the mobile radio, a location update procedure is triggered by the mobile. However, a problem with location area procedures is the associated signaling overhead.

Location area signaling overhead is particularly problematic in shared network situations. A shared network is a radio access network infrastructure shared by two or more cellular operators, typically to reduce the cost of network buildout and maintenance. Fig. 2 illustrates an example shared network 1 and includes a core network with one or more core network nodes 2 coupled to a radio access network (RAN) 4 which provides radio access service to a geographic coverage area 6. The core network typically has some significant responsibilities in handling mobile terminal registrations, location area monitoring and updates, and paging.

The geographic coverage area 6 is divided into several representative location areas (LAs), some of which are "owned" or operated by operator A, and some of which are owned or operated by operator B. For example, location area LA-A1 belongs exclusively to operator A, and location area LA-B1 belongs exclusively to operator B. In contrast, location areas LA-A2, owned by operator 2, and LA-B2, owned by operator B, overlap in coverage area.

The responsibilities and tasks for establishing connections to/from a mobile terminal are often divided between the core network 2 and the radio access network 4. For example, in a UMTS network, these tasks are divided between a logical non-access stratum (NAS) and a logical access stratum (AS). NAS signaling does not require substantive inputs from the RAN, while AS signaling does. The non-access stratum is responsible for mobility management for idle mobile terminals on a location area (LA) level and a routing area (RA) level. The access stratum is responsible for mobility management for connected mobile terminals on a UTRAN registration Area (URA) and cell level. An idle mobile terminal is "on," registered, and accessible, but is not currently involved in or using a radio connection supported by the RAN. A connected mobile terminal is currently involved in or using a radio connection supported by the RAN. Being "connected," the radio network knows the location of the mobile terminal on a cell or a UTRAN Registration Area (URA) level, the core network knows that the mobile terminal is connected.

This allocation of responsibility and tasks between NAS (i.e., core network) and AS (i.e., RAN) does not satisfactorily address situations where the radio access network 4 is shared by two competing (or cooperating) operators, such as the operators A and B shown in Fig. 2. When a mobile terminal in a connected mode is leaving a location area to a cell in a new location area, the mobile terminal may not be allowed to enter the new location area if it is configured for/owned by a competing (or cooperating) operator. A solution to this problem is for the mobile terminal to perform a location area update that involves the core network in such a situation. Upon receiving the location area update from the mobile terminal, the core network detects the identification number of the mobile terminal, e.g., its IMSI number, and checks a database maintained by the core network to determine if the mobile terminal is permitted in the new location area. If it is not permitted, the core network rejects the location update, and the mobile terminal looks for an alternative cell. As shown in the geographic coverage area 6 of Fig. 2, the mobile terminal belongs to operator B and is leaving location LA-B1 into a coverage area shared by operators A and B. Even if the mobile is connected (rather than idle), a location update should be performed so that if the mobile terminal selects a cell in location area LA-A2, the core network will reject that request. As a result, the mobile terminal will have to reselect another cell, hopefully an overlapping cell in location area LA-B2. Another scenario to be addressed is where a mobile terminal belonging to operator B leaves a shared location area and enters an area that is not shared, but where both operators A and B are present. If the mobile terminal selects a cell belonging to operator A, the core network rejects that request, and the mobile terminal then selects a cell belonging to operator B.

The difficulty with this comprehensive location area update approach for idle and connected mobiles is that it adds substantial location area signaling load/overhead, and in particular, when the network is not shared between different operators. There may not be a need for the core network to know the exact location of a mobile terminal while it is in a connected mode except for certain circumstances, e.g., the network is being shared by two or more operators. In other words, there may be some situations, such as a shared location area, when the mobile should perform a location area update with the core network as well as other situations when there is no need for a location area update. The present invention resolves this problem.

In the present invention, a connection is established between a mobile radio terminal and a radio access network serving plural geographic coverage areas. The radio access network transmits information associated with one of the geographic coverage areas indicating whether the one geographic coverage area requires a geographic coverage area update procedure. During the connection, when the mobile radio terminal considers selecting the one geographic coverage area, it determines whether to perform a geographic coverage area update procedure depending on the transmitted information associated with the one geographic coverage area. In one example embodiment, the geographic coverage area update procedure involves communication with a core network coupled to the radio access network. In an example, non-limiting application, the radio access network is shared by two operators. The transmitted information indicates that the geographic coverage area update procedure should be performed for geographic coverage areas that are shared by the two operators and that the geographic coverage area update procedure need not be performed for geographic coverage areas that are not shared by the two operators. In addition, cells located in a non-shared location area that are adjacent to a cell in a shared geographical area may also send an indication that a location update procedure is necessary.

The mobile terminal may obtain the information indicating whether the one geographic coverage area, whether shared or not, requires an update procedure, in a preferred example embodiment, by listening to a system information message broadcast in the geographic coverage area. During a connection, when the mobile terminal selects or enters the geographic coverage area, it determines whether to perform an update procedure depending on the broadcast system information message associated with the one geographic coverage area. In an example application to a UMTS terrestrial radio access network (UTRAN), the geographical coverage area is a location area, and the mobile radio terminal receives a location area access indicator in the system information block (SIB) message broadcast for the one location area. The present invention also provides for a new broad system information message in which the system information includes, in addition to a location area identifier, an access restriction indicator (ARI) associated with the identified location area. If the mobile does perform a location update, it may create a list of allowed (or forbidden) location areas when the network informs the mobile in response to the location area update that the location area is allowed or forbidden. That list may later be used by the mobile terminal to avoid performing location area updates for location areas in the list.

From the perspective of the radio access network, the network sends information associated with one of the geographic coverage areas indicating whether the geographic coverage area requires an update procedure when a connected mobile radio terminal selects that coverage area. The radio access network determines which of its coverage areas have an access restriction (and which do not) and then broadcasts in each geographic coverage area a geographic coverage area restriction indicator in accordance with its determination. For example, access restrictions may be determined for different geographic coverage areas in the context of a shared radio access network where update procedures are indicated for shared areas and not indicated for areas that are not shared. In addition, location area updates may be required irrespective of whether an area is shared.

### BRIEF DESCRIPTION OF THE DRAWINGS

The foregoing and other objects, features, and advantages of the present invention may be more readily understood with reference to the following description taken in conjunction with the accompanying drawings.
Fig. 1 is an illustration of a mobile radio terminal moving between cells in two different location areas;
Fig. 2 illustrates a cellular radio communications system in which two operators share some geographic coverage areas;
Fig. 3 shows a location area update procedure in flowchart form;
Fig. 4 illustrates a location area access restriction indication procedure in flowchart form;
Fig. 5 illustrates a mobile terminal leaving a cell in an unshared location area to a cell in a shared location area;
Fig. 6 illustrates a universal mobile telecommunications system (UMTS) in which the present application may be advantageously employed;
Figs. 7 and 8 are simplified function block diagrams of the user equipment node, radio network controller node, and base station/node B shown in Fig. 5;
Fig. 9 is a diagram illustrating example signaling for a successful location area update;
Fig. 10 is a diagram illustrating an unsuccessful location area update; and
Fig. 11 illustrates a fragment of an example system information block message in accordance with the invention.

### DETAILED DESCRIPTION

In the following description, for purposes of explanation and not limitation, specific details are set forth, such as particular embodiments, procedures, techniques, etc. in order to provide a thorough understanding of the present invention. However, it will be apparent to one skilled in the art that the present invention may be practiced in other embodiments that depart from these specific details. For example, while the present invention is described in an example application to shared networks, the present invention may be employed in any application where location area access restrictions are desired or appropriate.

In some instances, detailed descriptions of well-known methods, interfaces, devices, and signaling techniques are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

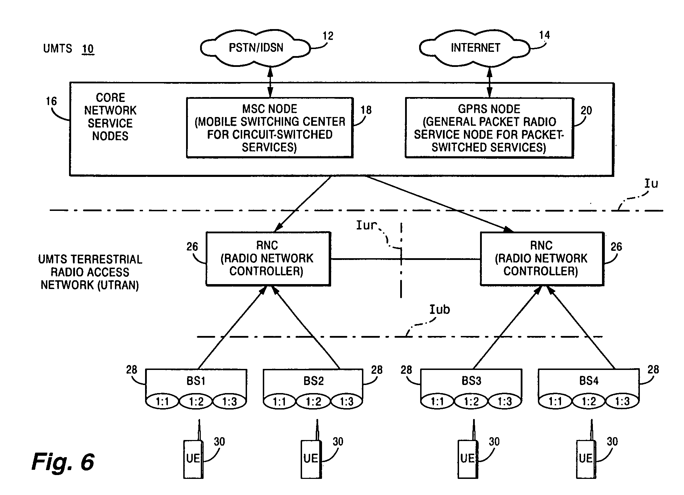

The present invention may be employed in any cellular communications system including for example that shown in Fig. 2 as well as the UMTS system shown in Fig. 6 and described below. One objective of the present invention is to maintain control of the mobility management type functions in the non-access stratum (NAS). Another objective of the present invention is to provide location area update procedures for connected mobile terminals, where necessary, while at the same time minimizing the amount of location area update signaling required.

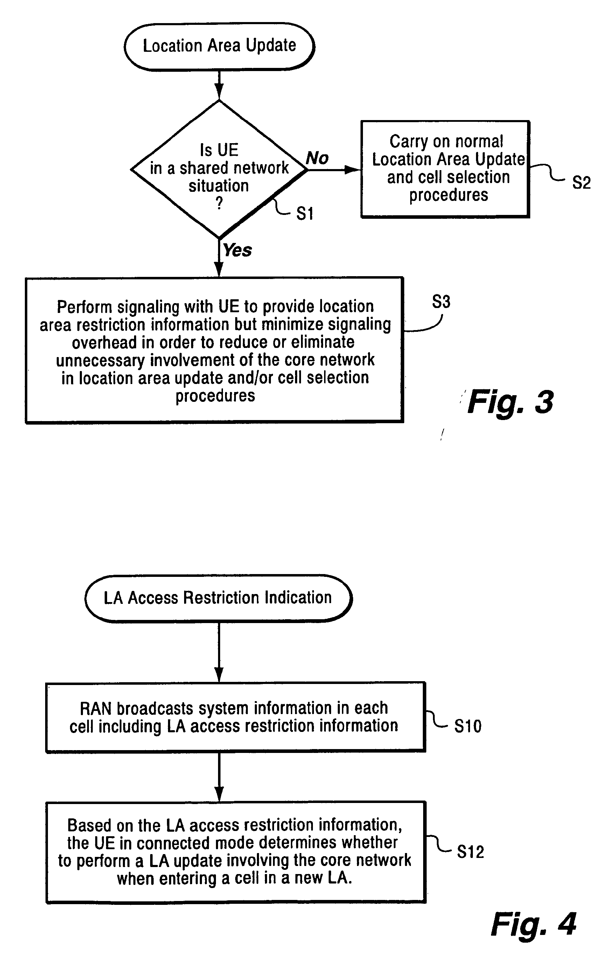

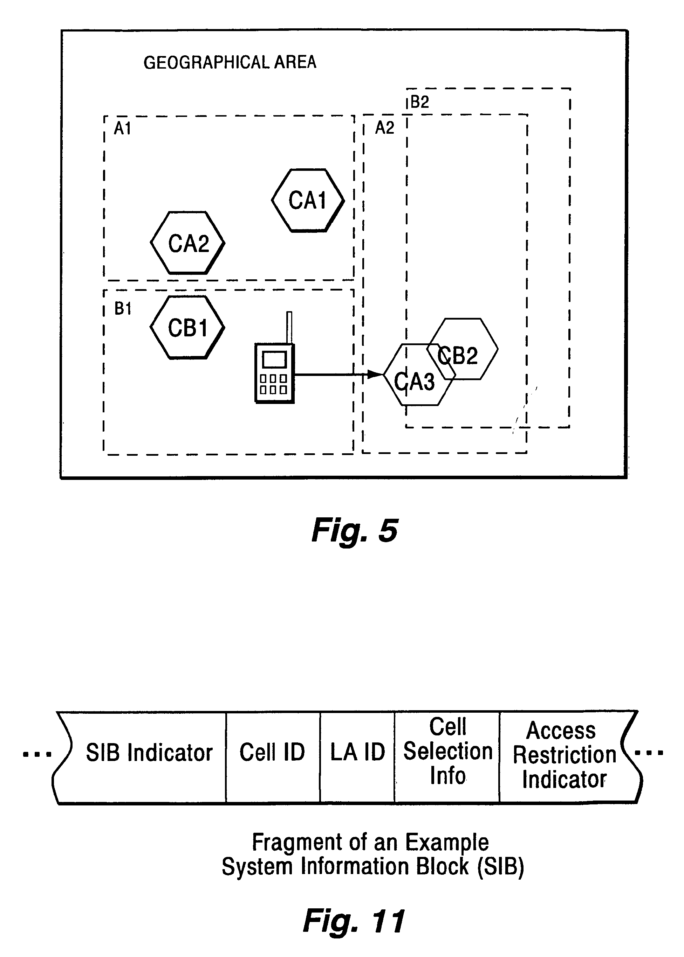

One example, non-limiting situation where such location area update procedures may be necessary is in a shared network. In this regard, reference is made to the location area update procedure illustrated in flowchart form in Fig. 3. A decision is made in step S1 whether the mobile terminal user equipment is in a shared network situation. If not, the user equipment and the cellular system carry on normal location area update and cell selection procedures as shown in step S2. However, in a shared network situation, signaling is performed with the UE to provide location area access restriction information with minimum signaling overhead in order to reduce or eliminate unnecessary involvement of the core network in location area update and/or cell selection procedures. The present invention provides a location area access restriction indication procedure shown in Fig. 4 that may be used in scenarios where an area is shared or not shared.. The radio access network 4 broadcasts system information in each cell, including location area access restriction information (step S10). Based on the received location access restriction information for a particular cell, a user equipment terminal operating in a connected mode (as defined above) determines whether to perform a location area update involving the core network when entering a cell in a new location area (step S12). Referring to the geographical area shown in Fig. 5, (similar to that shown in Fig. 2 with the addition of representative cells), a mobile radio terminal in connected mode is shown moving out of operator B's location area B1, an area which is not shared with operator A, and into a shared location area. The mobile radio receives information broadcast from cell CA3 in A's location area A2. That broadcast information includes a location access restriction indication. Accordingly, the mobile terminal performs a location area update with the core network. The core network checks the mobile's identity, e.g., its IMSI, against a database storing a list of location areas that mobile may or may not obtain service.

If access is restricted for that mobile terminal to cells in location area A2, e.g., the mobile terminal's home operator is B, the mobile terminal has roaming restrictions, etc., the mobile terminal is informed by the core network that it must select another cell. Since operator B has an overlapping location area B2, the mobile terminal will also likely receive the system information message broadcast from cell CB2, detect the access restriction indication, and will perform another location update request which will ultimately be accepted by the core network.

The mobile terminal may optionally create a temporary list of allowed or forbidden location areas when it receives LA information from the core network in response to LA update requests. The mobile may then consult that list to determine whether a LA update operation needs to be performed. For example, if the mobile receives an ARI for LA1, it checks with the core network and discovers that LA1 is forbidden. The mobile stores this information in its temporary LA list. If the mobile subsequently receives an ARI for LA2, it checks with the core network and discovers that LA2 is allowed. If after leaving LA1 or LA2, the mobile receives the ARI for LA1 or LA2, it need only consult its LA list to determine whether LA1 or LA2 is allowed or forbidden. No LA update need be performed.Of course, the present invention is not limited to this type of scenario.

Another type of shared network scenario is when the mobile terminal belonging to network operator B leaves a shared location area and enters a geographical area that is not shared but where both operators A and B are present. An access restriction message may be transmitted designating cells in that area belonging to operator A so that the mobile terminal knows not to access those cells. Nor is the present invention limited to shared network scenarios in general. Indeed, an access restriction indicator may be sent for cells or areas for any reason and in any situation.

The present invention allows operators to place access restrictions on specific location areas in a selective fashion that requires minimal signaling overhead. In other words, location update essages are sent only when necessary. One example situation in which this is useful is in the shared network environment where operators do not want to permit users to select cells in competing operators' overlapping location areas. In such restricted environments, the mobile terminal selectively performs a location area update procedure with the core network (or the radio access network depending on how network mobility tasks are allocated in a cellular system) to determine whether access to that cell is permitted.

Indeed, there may be other situations, in addition to the shared network situation, where it is useful to place access restrictions on particular location areas. For example, one operator may wish to allow the use of locations areas only for a particular group of subscribers based on a service agreement. In that case, there will need to be access restrictions on the subscribers that do not subscribe to that particular service agreement. On the other hand, the present invention does not increase location area update signaling in those situations where it is not necessary, e.g., in networks that are not shared between different operators, or where there is no differentiation of service provided to different subscribers.

The present invention is described in another non-limiting, example context of a Universal Mobile Telecommunications System (UMTS) 10 shown in Fig. 6. A representative, connection-oriented, external core network, shown as a cloud 12 may be, for example, the Public Switched Telephone Network (PSTN) and/or the Integrated Services Digital Network (ISDN). A representative, connectionless-oriented external core network shown as a cloud 14, may be for example the Internet. Both core networks are coupled to corresponding core network service nodes 16. The PSTN/ISDN network 12 is connected to a connection-oriented service node shown as a Mobile Switching Center (MSC) node 1 that provides circuit-switched services. The Internet network 14 is connected to a General Packet Radio Service (GPRS) node 20 tailored to provide packet-switched type services which is sometimes referred to as the serving GPRS service node (SGSN).

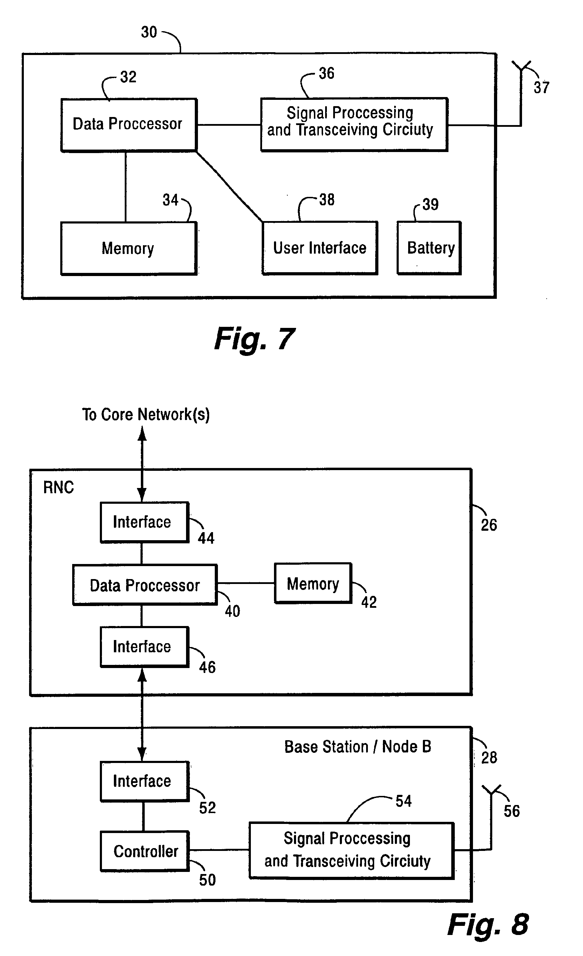

Each of the core network service nodes 18 and 20 communicate with a UMTS Terrestrial Radio Access Network (UTRAN) 24 over a radio access network (RAN) interface referred to as the lu interface. UTRAN 24 includes one or more radio network controllers (RNCs) 26. For sake of simplicity, the UTRAN 24 of Fig. 6 is shown with only two RNC nodes. Each RNC 26 communicates with a plurality of base stations (BS) 28 BS1-BS4 over the lub interfaces sometimes referred to as node B's. For example, and again for sake of simplicity, two base station nodes are shown connected to each RNC 26. It will be appreciated that a different number of base stations can be served by each RNC, and that RNCs need not serve the same number of base stations. Moreover, Fig. 6 shows that an RNC can be communicated over an lur interface to one or more RNCs in the UTRAN 24. A user equipment unit (UE), such as a user equipment unit (UE) 30 shown in Fig. 6, communicates with one or more base stations (BS) 28 over a radio or air interface 32. Each of the radio interface 32, the lu interface, the lub interface, and the lur interface are shown by dash-dotted lines in Fig. 6.Preferably, radio access is based upon Wideband Code Division Multiple Access (WCDMA) with individual radio channels allocated using CDMA spreading codes. Of course, other access methods may be employed. WCDMA provides wide bandwidth for multimedia services and other high transmission rate demands as well as robust features like diversity handoff and RAKE receivers to ensure high quality. Each user mobile station or equipment unit (UE) 30 is assigned its own scrambling code in order for a base station 28 to identify transmissions from that particular user equipment as well as for the user equipment to identify transmissions from the base station intended for that user equipment from all of the other transmissions and noise present in the same area.Fig. 7 shows a simplified function block diagram of mobile radio user equipment terminal 30. A data processor 32 is coupled to a memory 34 which stores data and software program information, and to signal processing and transceiving circuitry 36 coupled to an antenna 37. The data processor 32 is also coupled to user interface hardware such as, for example, a keypad, a display, a microphone, a speaker, etc. Power for the various blocks in the radio UE terminal 30 is provided by a battery 39. The signal processing and transceiving circuitry 36 converts information from the data processor, including messages such as location area update messages, into an appropriate format for transmission over the radio interface to the UTRAN via antenna 37 using an appropriate CDMA spreading code/radio channel. Information received over the radio interface, including system information and messages sent by the UTRAN, is demodulated and decoded by the signal processing and transceiving circuitry 36 for data processing by the data processor 32. For example, the data processor 32 receives a demodulated and decoded system information broadcast message and determines the value of a location area access restriction indicator.

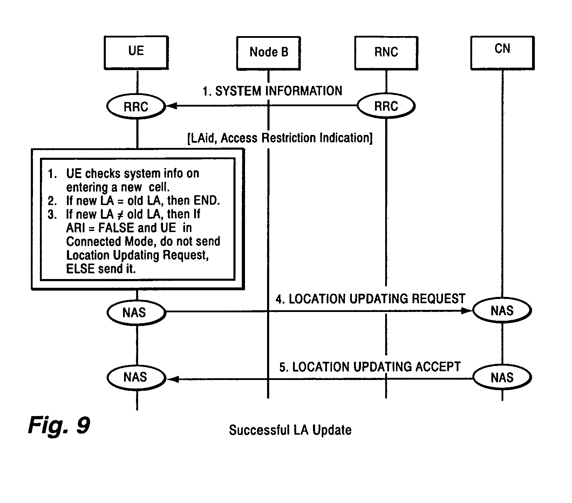

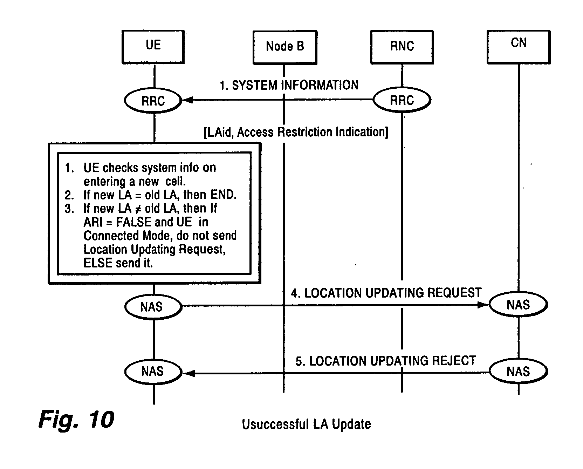

Fig. 8 illustrates simplified function block diagrams of radio network controller 26 and a base station/node B 28. The RNC 26 includes a data processor 40 coupled to memory 42 storing data and program software. The data processor is also coupled to a core network interface 44 as well as to an interface 46 to the base station/node B 28. The RNC 26 formulates a system information message that is transmitted by the base station/node B 28, which in the preferred example embodiment and explained in further detail below includes a location area identifier and an access restriction indicator for that location area. Base station 28 includes a controller 50 which may also include data processing and memory circuitry coupled to RNC interface 52 and appropriate signal processing and receiving circuitry 54 coupled to an antenna 56. The signal processing and transceiving circuitry for a base station/node B, similar in many respects to that for the UE, is more extensive. Reference is now made to the example, non-limiting signaling diagrams shown in Figs. 9 and 10. Fig. 9 shows a signaling sequence for a successful location area update incorporating an example embodiment of the present invention. When the mobile terminal is powered-on and registered with the network, it may operate in the idle mode. When the signal strength detected from the new cell is better than that received from the old cell, the idle mobile terminal performs a cell selection. As part of the cell selection process, the mobile terminal reads system information broadcast in the new cell, and in particular, it reads the location area identity of the new cell. If the mobile terminal decides to enter that new location area, it performs a location update request procedure with the core network. The core network can accept the location area update or reject it depending on the particular status of the mobile terminal and the new location area. The core network detects the identity of the mobile terminal using, for example, the mobile's International Mobile Subscriber Identifier (IMSI), compares that IMSI to a list of allowed IMSIs for that particular location area, and sends a message back to the mobile terminal permitting the mobile terminal to select that cell. Because the mobile terminal is in idle mode, it is important for the core network to know each time the mobile terminal selects a cell in a new location area in order for it to be able to perform necessary network mobility functions as described above in the background.

In contrast, when the mobile terminal is in a connected mode, there typically is no need to perform location area updates for network mobility reasons, because the location of the connected mobile is known by the radio network (UTRAN), and the core network has a connection to the radio network for the given mobile terminal. However, there may be circumstances that do not relate to network mobility where it is desired to have a location area update procedure be selectively performed by a mobile terminal operating in connected mode, e.g., in a shared network scenario as described above. In the example signaling flow diagram of Fig. 9, the mobile terminal is in a connected mode. The RNC node shown in Fig. 9 provides a SYSTEM INFORMATION message that includes a location area ID for that location area and an access restriction indication. The message is transmitted via the base station over a broadcast channel for the new cell being considered for selection by the mobile radio terminal. The mobile terminal checks that SYSTEM INFORMATION message to determine if the cell is in a new location area. If not, no further location area update is necessary. However, if the cell is in a new location area, the mobile terminal examines the address restriction indicator (ARI) in the SYSTEM INFORMATION message. If it is not set (false), the mobile user equipment terminal does not send a location update request to the core network. On the other hand, if the ARI is set (true), the radio terminal sends a LOCATION UPDATING REQUEST message to the core network. From that message, the core network detects the mobile terminal's IMSI and determines whether it is permitted in the new location area, e.g., by comparing it to a list of mobile IMSIs permitted (or not permitted) for the new location area. Based on that determination that the mobile is permitted, the core network sends a LOCATION UPDATING ACCEPT message to the mobile radio terminal.

Fig. 10 illustrates a signaling diagram for an unsuccessful location area update implementing an example embodiment of the present invention. The mobile terminal receives the SYSTEM INFORMATION message including the location area ID and ARI formulated by the RNC and transmitted via the base station/node B. The mobile radio then checks the SYSTEM INFORMATION message and determines that the ARI is set (true), meaning that there are access restrictions for this particular location area. A LOCATION AREA UPDATING REQUEST message is sent from the mobile terminal to the core network. In this case, the mobile terminal does not have rights to that new location area and the core network sends a LOCATION UPDATING REJECT message to the UE. The UE may store this location area ID for subsequent use, (for example in a forbidden list so that the UE does not attempt to access this location area again), and may select a cell in another nearby or overlapping location area and perform the same procedure.

Fig. 11 illustrates a non-limiting, example fragment of an example system information block (SIB) which may be included in the SYSTEM INFORMATION message broadcast by the RNC/base station for cells in a particular location area. The system information block includes an SIB indicator field, cell identifier field, a location area identifier field, a cell selection information field, and an access restriction indicator field. Of course, different or other fields may be included in the system information block in addition to the access restriction indicator field. In a preferred example embodiment, the access restriction indicator field includes a single bit that is either set to "1" (true) if there are access restrictions for that location area or to "0" (false) if there are no access restrictions. There are a number of system information blocks in a particular system information message broadcast over the air interface. There is no restriction in which system information block the ARI is placed. However, the ARI should be in a system information block that can be read by a mobile terminal in connected mode, or in a system information block that can be read by a mobile terminal in either idle mode or connected mode.

While the present invention has been described with respect to particular example embodiments, those skilled in the art will recognize that the present invention is not limited to those specific embodiments described and illustrated herein. Different formats, embodiments, adaptations besides those shown and described, as well as many modifications, variations and equivalent arrangements may also be used to implement the invention. Accordingly, it is intended that the invention be limited only by the scope of the claims appended hereto.

## Claims

1. Method for a mobile radio terminal for handling an entering of a new geographic coverage area, wherein the method comprises the steps of:
- establishing a connection with a radio access network;
- receiving from the radio access network information associated with one of the
- geographic coverage areas indicating whether the one geographic coverage area requires a geographic coverage area update procedure;
- during the connection, selecting the one geographic coverage area; and
- determining whether to perform a geographic coverage area update procedure depending on the received information associated with the one geographic coverage area.

2. Method according to claim 1, wherein the radio access network is shared by two operators and the information indicates that the geographic coverage area update procedure is performed for geographic coverage areas that are shared by the two operators and the geographic coverage area update procedure is not performed for geographic coverage areas that are not shared by the two operators.

3. The method in claim 1 or 2, wherein the geographic coverage area is a location area, the radio access network is a UMTS terrestrial radio access network (UTRAN), and the mobile radio terminal is in a connected mode.

4. Method according to any of the preceding claims wherein the mobile terminal receives the information as a location area access indicator in a system information message broadcast in the location area.

5. A method implemented in a cellular communications system including a radio access network serving plural geographic coverage areas, wherein the method comprises the step of sending from the radio access network over a radio interface information associated with one of the geographic coverage areas indicating whether the one geographic coverage area requires a geographic coverage area update procedure when a mobile radio terminal selects the one geographic coverage area.

6. Method according to claim 5, comprising the steps of:
- determining which geographic coverage areas have an access restriction, and
- broadcasting in those geographic coverage areas a geographic coverage area
- restriction indicator.

7. Method according to claim 5 or 6, wherein the geographic coverage area is a location area, the radio access network is a UMTS terrestrial radio access network (UTRAN), and the mobile radio terminal is in a connected mode.

8. Method according to claim 5, 6 or 7, wherein the radio access network is shared by two operators and the information indicates that the geographic coverage area update procedure should be performed for geographic coverage areas that are shared by the two operators and the geographic coverage area update procedure need not be performed for geographic coverage areas that are not shared by the two operators.

9. Mobile radio terminal, comprising radio transceiving circuitry configured to establish a connection with a radio access network, and electronic circuitry configured to perform the following tasks:
- process signals received from the radio access network information
- associated with one of the geographic coverage areas served by the radio access
- network indicating that the one geographic coverage area requires or does not
- require a geographic coverage area update procedure;
- select during the connection the one geographic coverage area; and
- determine whether to perform a geographic coverage area update procedure depending on the information associated with the one geographic coverage area.

10. Radio access network node for use in a cellular communications system serving plural geographic coverage areas, comprising:
- data processing circuitry configured to provide information associated with one of the geographic coverage areas indicating that the one geographic coverage area requires or does not require a geographic coverage area update procedure when a mobile radio terminal selects the one geographic coverage area, and
- radio transceiving circuitry configured to send and receive signals over a radio interface including to send the information provided by the data processing circuitry.

11. Radio access network node according to claim 10, wherein the data processing circuitry is further configured to determine which geographic coverage areas have an access restriction and to broadcast in those geographic coverage areas a geographic coverage area restriction indicator.
